# EUROPÄISCHE PATENTSCHRIFT

(11) **EP 3 141 415 B1**
(45) Veröffentlichungstag und Bekanntmachung des Hinweises auf die Patenterteilung: **16.06.2021**
(21) Anmeldenummer: 16183669.7
(22) Anmeldetag: 11.08.2016
(51) Int. Cl.: B60L 7/10, B60K 35/00, B60L 7/18, B60R 16/023, B60W 30/18

(54) **VERFAHREN UND VORRICHTUNG ZUR UNTERSTÜTZUNG EINES FAHRERS BEIM ABBREMSEN EINES KRAFTFAHRZEUGES**
METHOD AND DEVICE FOR ASSISTING A DRIVER DURING THE BRAKING OF A MOTOR VEHICLE
PROCÉDÉ ET DISPOSITIF D'ASSISTANCE DE CONDUCTEUR D'UN VÉHICULE LORS DU FREINAGE D'UN VÉHICULE AUTOMOBILE

(30) Priorität: 14.09.2015 DE 102015115438; 13.11.2015 DE 102015119697
(43) Veröffentlichungstag der Anmeldung: 15.03.2017
(73) Patentinhaber: Volkswagen Aktiengesellschaft, 38440 Wolfsburg (DE)
(72) Erfinder: Jakovlev, Sergej, 38100 Braunschweig (DE)
(74) Vertreter: Vogel, Andreas

(56) Entgegenhaltungen:
- DE-A1-102012 221 726
- US-A1- 2010 151 988
- US-A1- 2010 228 459
- US-A1- 2012 179 346
- ZHENGCE CAO, SEN WU, MINGZE LI, CHANGQING DU: "Series and Parallel Hybrid System PerformanceComparison Based on the City bus Cycle", POWER AND ENERGY ENGINEERING CONFERENCE, 2009. APPEEC 2009. ASIA-PACIFIC, 27. März 2009 (2009-03-27), - 31. März 2009 (2009-03-31), XP002766049, Wuhan, China DOI: 10.1109/APPEEC.2009.4918739
- ZHONGYUE ZOU ET AL: "Evaluation strategy of regenerative braking energy for supercapacitor vehicle", ISA TRANSACTIONS., Bd. 55, 1. März 2015 (2015-03-01), Seiten 234-240, XP055335520, US ISSN: 0019-0578, DOI: 10.1016/j.isatra.2014.09.011
- B J Varocky ET AL: "Benchmarking of regenerative braking for a fully electric car (Report no. D&C 2011.002", , 1. Januar 2011 (2011-01-01), XP055334433, Technische Universiteit Eindhoven Gefunden im Internet: URL:http://www.mate.tue.nl/mate/pdfs/12673 .pdf [gefunden am 2017-01-17]

## Beschreibung

Die Erfindung betrifft ein Verfahren zur Unterstützung eines Fahrers beim Betrieb, insbesondere beim Abbremsen, eines Kraftfahrzeuges, insbesondere eines Elektro-Kraftfahrzeuges, eines Hybrid-Kraftfahrzeuges oder eines Mild-Hybrid-Kraftfahrzeuges, nach Anspruch 1 und ein entsprechendes System in einem Kraftfahrzeug nach Anspruch 10.

Moderne Kraftfahrzeuge weisen oft eine Nutzbremse oder eine Rekuperationsbremse auf, die dazu dient, beim Bremsen eines Kraftfahrzeugs die Bewegungsenergie als elektrische Energie zurückzugewinnen. Bei Elektro- oder Hybridkraftfahrzeugen kann die Bewegungsenergie dadurch abgespeichert werden, dass der Antriebs-Elektromotor (die E-Maschine) als Generator betrieben wird. Durch den Abgriff der mechanischen Bewegungsenergie wird der Bremseffekt erzielt. Dabei spricht man von einer elektrischen Bremse. Zusätzlich kann in Elektro- bzw. Hybridkraftfahrzeugen eine bekannte mechanische Bremse eingesetzt werden, um den Bremseffekt zu unterstützen oder zu erhöhen. Bei der mechanischen Bremse werden mechanische Reibungswiderstände eingesetzt. Durch den Effekt der Reibung wird die mechanische Bewegungsenergie in Wärmeenergie umgewandelt und somit der Bremseffekt erzielt. Im Gegensatz zu einer reinen Reibungsbremse geht die aus der Bewegungsenergie zurückgewonnene elektrische Energie bei der elektrischen Bremse nicht verloren. Bei einer ungünstigen Betätigung einer Bremse kann allerdings nur wenig mechanische Energie in Batterieladung umgewandelt werden.

Aus der DE 10 2012 221 726 A1 ist es z. B. bekannt, zwischen Verlusten an Wärmeenergie und einer möglichen Menge an zurückgewonnener Energie durch die Rekuperation abzuwägen, um einen günstigen Fahrerwunsch zu ermitteln. Der günstige Fahrerwunsch ist dabei darin gesehen, wenn die mögliche Menge an zurückgewonnenen Energie durch die Rekuperation die Wärmeenergie-Verluste übersteigt. Der Nachteil einer solcher Auswertung kann dabei darin liegen, dass unter einem möglichen günstigen Fahrerwunsch gemäß der DE 10 2012 221 726 A1, wenn eine mögliche elektrische Bremsleistung größer eingestuft wurde als die mechanische Bremsleitung, auch der Fall fallen kann, wenn die elektrische Bremsleistung durch kinematische Verluste im Antriebsstrang völlig verschwendet wird.

Allgemeine Schriften zum Stand der Technik bilden weiterhin die Veröffentlichung ZHENGCE CAO, SEN WU, MINGZE LI, CHANGQING DU: "Series and Parallel Hybrid System Performance Comparison Based on the City bus Cycle", POWER AND ENERGY ENGINEERING CONFERENCE, 2009. APPEEC 2009. ASIA-PACIFIC, 27. März 2009 (2009-03-27), - 31. März 2009 (2009-03-31), XP002766049, Wuhan, China und die Druckschrift US 2010/0151988 A1.

Der Erfindung liegt daher die Aufgabe zu Grunde, mindestens einen aus dem Stand der Technik bekannten Nachteil zumindest zum Teil zu überwinden. Insbesondere ist es Aufgabe der vorliegenden Erfindung, ein verbessertes Verfahren und ein entsprechendes System zur Unterstützung eines Fahrers beim Betrieb, insbesondere beim Abbremsen, eines Kraftfahrzeuges zur Verfügung zu stellen, welche insbesondere eine effektive Aufladung eines elektrischen Speichers durch eine E-Maschine beim Abbremsen des Kraftfahrzeuges ermöglichen.

Die Erfindung stellt hierbei ein Verfahren zur Unterstützung eines Fahrers beim Abbremsen eines Kraftfahrzeuges bereit, wobei das Kraftfahrzeug mit einer E-Maschine zum Aufladen eines elektrischen Speichers ausgestattet ist, und wobei die E-Maschine mit einem Antriebsstrang des Kraftfahrzeuges koppelbar ist, um den elektrischen Speicher aufzuladen, wobei der Antriebsstrang einen Verbrennungsmotor und ein Getriebe umfasst. Das erfindungsgemäße Verfahren umfasst dabei folgende Schritte:
- Auswerten einer effektiven Aufladung eines elektrischen Speichers durch die E-Maschine beim Abbremsen des Kraftfahrzeuges,
- Bereitstellen einer Information zur optimalen Betätigung einer mechanischen und/oder elektrischen Bremse, die durch einen Fahrer nacheinander oder gleichzeitig betätigt werden können, an den Fahrer in Abhängigkeit von der Auswertung,
wobei beim Auswerten kinematische Verluste berücksichtigt werden, die durch Koppeln der E-Maschine mit dem Antriebsstrang und somit durch Mitschleppen mindestens des Verbrennungsmotors des Antriebsstranges, entstehen. Unter einer Betätigung einer Bremse ist dabei gemeint, dass der Fahrer eine elektrische Bremse (Nutzbremse oder E-Maschine als Generator) und/oder eine mechanische Bremse (Wiederstandbremse) nacheinander oder gleichzeitig betätigen kann. Unter einer Bremse kann somit gemäß der Erfindung eine elektrische Bremse und/oder eine mechanische Bremse, oder mit anderen Worten eine Kombinationsbremse verstanden werden. Das Kraftfahrzeug kann dabei mit einer E-Maschine auf der Kurbelwelle einer Verbrennungskraftmaschine oder im Riementrieb der Verbrennungskraftmaschine ausgestattet sein. Hierbei kann die E-Maschine mit einem Antriebsstrang des Kraftfahrzeuges in einer ständigen Verbindung oder im Riementrieb mit der Verbrennungskraftmaschine gekoppelt werden. Das Verfahren ist insbesondere für Elektrokraftfahrzeuge, Hybridkraftfahrzeuge und/oder Mild-Hybridkraftfahrzeuge, jeweils mit einer oder mehreren E-Maschinen vorteilhaft. Wenn ein Fahrzeug mindestens zwei unterschiedliche Energiespeicher (z.B. Tank und Batterie) und mindestens zwei unterschiedliche Energiewandler (z.B. Verbrennungs- und E-Motor) aufweist, kann ein solches Kraftfahrzeug als ein Hybrid-Fahrzeug im Sinne der Erfindung bezeichnet werden. Unter einem Mild-Hybridkraftfahrzeug kann im Sinne der Erfindung ein Fahrzeug mit einem Riemen-Starter-Generator mit einer geringeren elektrischen Leistung als ein Riemen-Starter-Generator in einem Hybridkraftfahrzeug verstanden werden.

Der Erfindungsgedanke liegt dabei darin, die energetischen Verluste beim Abbremsen des Kraftfahrzeuges genau zu erkennen und nach ihrer Art und ihrem Ursprung zu analysieren, um die Aufladung des elektrischen Speichers zu optimieren und eine sinnvolle Empfehlung zur Betätigung einer Bremse an den Fahrer bereitzustellen. Erfindungsgemäß sollen dabei zunächst oder zumindest kinematische, oder mit anderen Worten mechanische, Verluste im Antriebsstrang berücksichtigt werden. Die Erfindung erkennt dabei, dass das Kraftfahrzeug mit einer E-Maschine, insbesondere bei Anordnung dieser auf der Kurbelwelle oder im Riementrieb der Verbrennungskraftmaschine, während einer Bremsung mit der E-Maschine einen signifikanten Teil der kinetischen Energie als Schleppverluste der Verbrennungskraftmaschine sowie der restlichen Antriebsstrang-Komponenten verlieren kann. Eine zu schwache Bremsung kann somit in manchen Fällen, je nach der Größe der Verbrennungskraftmaschine und des Antriebsstranges, der Leistungsgrenze der E-Maschine oder dergleichen, zu einem hohen Anteil an mechanischen Verlusten führen, aber nur zu einer geringen elektrischen Rekuperationsleistung. Eine Betätigung einer elektrischen Bremse kann in solchen Fällen wirkungslos bleiben oder mit anderen Worte keine Rückgewinnung der Bewegungsenergie in die elektrische Energie ermöglichen.

Oft verfügen Kraftfahrzeuge mit einer E-Maschine auf der Kurbelwelle oder im Riementrieb der Verbrennungskraftmaschine über eine begrenzte Leistung der E-Maschine, die z. B. durch Beschränkungen im Riementrieb, in der Kapazität des elektrischen Speichers, der niedrigen Spannungslage der elektrischen Komponenten von z.B. nur 12 Volt oder 48 Volt oder dergleichen begründet werden kann. In solchen Fällen kann sogar eine volle Betätigung der elektrischen Bremse oft nicht die gewünschte Bremsung gewährleisten. Die Bremsleistung kann in solchen Fällen durch eine mechanische Bremse als Unterstützung oder statt der elektrischen Bremse sichergestellt werden.

Auch sind Fälle gemäß der Erfindung denkbar, bei denen die elektrische Bremse gar nutzlos sein kann, wenn die Schleppverluste der mechanischen Komponenten im Antriebsstrang, wie z. B. der Verbrennungskraftmaschine, zu hoch sein können. Es kann dann die Situation entstehen, bei der ein, insbesondere geringer, Verzögerungswunsch bis zu einer bestimmten Grenze alleine durch Fahrwiderstände beim Ausfahren des Kraftfahrzeuges realisiert werden kann. In solchen Fällen kann die E-Maschine, ggf. zusammen mit weiteren Komponenten, z.B. der Verbrennungskraftmaschine, vom restlichen Antriebsstrang abgekoppelt bleiben, damit das Kraftfahrzeug ausrollen kann, ohne die zusätzliche kinetische Energie durch weitere Verluste in den so abkoppelten Komponenten zu dissipieren. Aus energetischer Sicht kann ein solcher Betrieb als "Segelbetrieb" bezeichnet werden, wobei der "Segelbetrieb" gegenüber der rekuperativen Bremsung zu bevorzugen sein kann. Für den "Segelbetrieb" kann, z. B. sobald ein Fahrpedal entlastet wird, eine Kupplung zwischen der E-Maschine bzw. dem Verbund aus E-Maschine und Verbrennungskraftmaschine und dem restlichen Antriebsstrang geöffnet und falls möglich die Verbrennungskraftmaschine abgestellt werden, um den "Segelbetrieb" mit "Motor Aus" zu realisieren. Wenn jedoch eine stärkere Verzögerung gewünscht wird, kann die elektrische Bremse und/oder die mechanische Bremse hinzugezogen werden, wobei dann im Sinne der Erfindung man von einer Betätigung einer Bremse sprechen kann.

Um eine optimale Betätigung einer Bremse (einer elektrischen und/oder einer mechanischen Bremse) zu ermöglichen, insbesondere nachdem die gewünschte Verzögerung nicht alleine durch Ausfahren des Kraftfahrzeuges im "Segelbetrieb" gewährleistet werden kann, kann zunächst ein möglichst großer Anteil der Bremsleistung, wenn möglich bis zu einer Leistungsgrenze der elektrischen Bremse, durch die elektrische Bremse bereitgestellt werden. Hierzu kann die Kupplung zwischen der E-Maschine bzw. dem Verbund aus E-Maschine und Verbrennungskraftmaschine und dem restlichen Antriebsstrang wieder geschlossen werden. Die Kupplung muss insbesondere in Kraftfahrzeugen geschlossen werden, in denen sich die E-Maschine auf der Motor-Seite der Kupplung befindet und nicht auf der Rad-Seite. Damit entstehen erneut zusätzliche Verluste im Antriebsstrang. Eine zu schwache Bremsbetätigung einer Bremse (einer elektrischen und/oder einer mechanischen Bremse) kann also zu deutlich höheren mechanischen Verlusten führen als im "Segelbetrieb", ohne jedoch den gewünschten hohen rekuperativen Bremsanteil. Ist daher eine stärkere Verzögerung als im Segelbetrieb gewünscht, sollte für einen energetisch optimalen Betrieb, also für eine effektive Aufladung des elektrischen Speichers, die Verzögerung so hoch sein, dass sie zumindest eine sogenannte Summen-Verzögerung aus Fahrwiderständen und eine Verzögerung aus Triebstrangverlusten übersteigt und im bevorzugten Fall der maximalen Leistung der E-Maschine entspricht. Erst nachdem die maximale Leistung der E-Maschine ausgeschöpft ist, kann für eine stärkere Abbremsung die mechanische Bremse betätigt werden.

Im Rahmen der Erfindung kann vorgesehen sein, dass beim Auswerten kinematische Verluste berücksichtigt werden, die durch Mitschleppen eines Getriebes des Kraftfahrzeuges entstehen. Die Erfindung kann somit sicherstellen, dass mechanische bzw. kinematische Verluste durch Mitschleppen oder Mitschwingen sämtlicher Komponenten im Antriebstrang zwischen einem Rad und dem elektrischen Speicher berücksichtigt werden können, bevor mit einer effektiven Aufladung des elektrischen Speichers begonnen werden kann.

Weiterhin können im Rahmen der Erfindung beim Auswerten elektrische Verluste zum Aufladen einer weiteren E-Maschine berücksichtigt werden, die insbesondere in ständiger Wirkverbindung mit dem Antriebsstrang oder mit einem Rad des Kraftfahrzeuges oder mit einem zweiten Antriebsstrang des Kraftfahrzeuges stehen kann. Manchmal werden Kraftfahrzeuge mit mehreren elektrischen Speichern und mehreren E-Maschinen ausgeführt. Die Aufladung von weiteren elektrischen Speichern kann ebenfalls im Sinne der Erfindung berücksichtigt werden. Eine weitere bzw. zweite E-Maschine kann sich auf der Rad-Seite der Kupplung vor dem Getriebe, oder hinter dem Getriebe, oder direkt am Rad, oder an einer separaten angetriebenen Achse befinden. Wenn die zweite E-Maschine die "primäre" E-Maschine für die Rekuperation ist, so kann bei Bremswunsch des Fahrers zunächst mit der zweiten E-Maschine eine beliebige Rekuperationsleistung gestellt werden. Währenddessen kann der Betrieb der ersten E-Maschine als "Segelbetrieb" ausgeführt werden, in dem die Kupplung zum Antriebsstrang geöffnet und der Motor ausgeschaltet werden kann. Die Bremsleistung kann in diesem Falle entsprechend aus Summen-Verzögerung, der Verlustleistung durch Koppeln der E-Maschine an dem Antriebsstrang und Aufladen der zweiten E-Maschine zusammengesetzt werden. Sobald eine bestimmte Höhe des Bremswunsches erreicht wird, die durch Summen-Verzögerung, Schleppverluste im Antriebsstrang und die maximale Leistung der zweiten E-Maschine bestimmt ist, kann die Kupplung geschlossen werden, um die Rekuperation an der ersten E-Maschine zu ermöglichen. Wenn anschließend der Bremswunsch der maximalen Leistung der ersten und der zweiten E-Maschine erreicht ist, so kann man für eine stärkere Abbremsung die mechanische Bremse hinzuziehen. Wenn wiederum die erste E-Maschine die primäre E-Maschine ist, kann bis zum Erreichen der Leistungsgrenze der ersten E-Maschine so verfahren werden, als wäre nur die erste E-Maschine im System vorhanden. Anschließend kann statt der mechanischen Reibungsbremse zunächst die elektrische Bremsleistung auf der zweiten E-Maschine gestellt werden. Die anzustrebende optimale Verzögerung liegt in den beiden genannten Fällen erfindungsgemäß bei maximaler elektrischer Auslastung, also bei maximaler elektrischer Abgabeleistung, der beiden E-Maschinen.

Zudem kann im Rahmen der Erfindung für den Fall, wenn z.B. durch willkürlich ungünstige Ansteuerung der Leistungselektronik der E-Maschine die thermische Belastung (ggf. Überlastung) der E-Maschine überproportional wird, vorgesehen sein, dass ein mechanischer Bremseingriff an der (thermisch wesentlich höher belastbaren) Reibungsbremse vorzuziehen sein kann. Dadurch kann vorteilhafterweise die E-Maschine oder mehrere E-Maschinen von Überhitzung und/oder Überlastung geschützt werden.

Erfindungsgemäß können beim Auswerten elektrische Zustandsgrößen der E-Maschine berücksichtigt werden, insbesondere elektrische Leistung, Strom, Spannung. Dadurch kann die elektrische Leistung der E-Maschine optimal abgeschätzt werden, um insbesondere zu erkennen, wann die Bremsleistung nicht mehr durch die E-Maschine alleine bereitgestellt werden kann und die Hilfe einer mechanischen Bremse benötigt ist. Auch können gemäß der Erfindung beim Auswerten mechanische Zustandsgrößen der E-Maschine berücksichtigt werden, insbesondere mechanische Leistung, Drehzahl, Drehmoment. Diese Zustandsgrößen können dazu dienen, die elektrische Leistung der E-Maschine zu bestimmen und die Schleppverluste im Antriebsstrang abzuschätzen. Des Weiteren können auch thermische Zustandsgrößen, insbesondere Temperatur, der E-Maschine berücksichtigt werden, um die Abschätzungen weiter zu präzisieren. Die Auswertung kann dadurch optimiert werden und die Information an den Fahrer plausibilisiert werden, um möglichst getreu wiederzugeben, wann die Rekuperation möglich ist bzw. wann die Rekuperation sinnvoll ist.

Weiterhin können beim Auswerten elektrische Zustandsgrößen des Speichers berücksichtigt werden, insbesondere elektrische Leistung, Strom, Spannung. Vorteilhafterweise kann somit erkannt werden, wann die rekuperative Wirkung ausgeschöpft ist und die elektrische Bremse einen begrenzten Nutzeffekt hat. In diesem Falle kann die Betätigung der mechanischen Bremse sinnvoll sein. Des Weiteren können auch thermische Zustandsgrößen (Temperaturen) des Speichers verwendet werden, um die Abschätzungen weiter zu präzisieren.

Des Weiteren können erfindungsgemäß beim Auswerten mechanische Zustandsgrößen des Motors berücksichtigt werden, insbesondere mechanische Leistung, Drehzahl, Drehmoment. Mithin können die kinematischen Verluste bei Rekuperation genauer bestimmt werden. Des Weiteren können auch thermische Zustandsgrößen (Temperaturen) des Verbrennungsmotors verwendet werden, um die Abschätzungen weiter zu präzisieren.

Zudem können gemäß der Erfindung beim Auswerten mechanische Zustandsgrößen des Getriebes berücksichtigt werden, insbesondere Eingangs-Drehzahl, Eingangs-Drehmoment, Ausgangs-Drehzahl, Ausgangs-Drehmoment, gewählter Gang. Somit können die kinematischen Verluste durch Mitschleppen des Getriebes bei Rekuperation abgeschätzt werden. Des Weiteren können auch thermische Zustandsgrößen (Temperaturen) des Getriebes verwendet werden, um die Abschätzungen weiter zu präzisieren.

Nach einem Vorteil der Erfindung kann durch Auswählen, insbesondere automatisch, einer Gangstufe im Getriebe, sichergestellt werden, dass die Schleppverluste im Antriebsstrang möglichst reduziert werden, insbesondere ohne Hilfe des Fahrers. Mit einer entsprechenden Übersetzung im Getriebe, ähnlich wie im Falle einer sogenannten Motorbremse, ändern sich die kinematischen Verluste im Antriebsstrang, wobei bei der Rekuperation niedrige kinematische Verluste von Vorteil sind. Vorteilhafterweise kann gemäß der Erfindung, beim Betätigen der elektrischen Bremse der entsprechende Gang automatisch eingestellt werden. Somit kann der Fahrer entlastet werden. Ist eine automatische Auswahl der Gangstufe im Getriebe nicht möglich, so kann zumindest eine Empfehlung der manuell zu wählenden Gangstufe dem Fahrer mitgeteilt werden.

Ferner können im Rahmen der Erfindung beim Auswerten mechanische Zustandsgrößen des Kraftfahrzeuges berücksichtigt werden, insbesondere Geschwindigkeit, Verzögerung. Von den Zustandsgrößen sind die Luftwiderstands-Verluste abhängig, die durch den "Segelbetrieb" bei Ausfahren des Kraftfahrzeuges entstehen, aber auch die Verluste im Antriebsstrang. Diese Zustandsgrößen können somit die Auswertung verbessern.

Des Weiteren ist es denkbar, dass beim Auswerten Daten der Umfeldsensorik des Kraftfahrzeuges berücksichtigt werden können, insbesondere von Assistenzsystemen, wie Geschwindigkeitsregelanlage, Abstandshaltefunktion, Abstandswarner, Verkehrsschildererkennung, Notbremsassistent. Diese Daten ermöglichen es, aktuelle Zustandsgrößen des Kraftfahrzeuges für die Auswertung zu gewinnen und sogar diese Zustandsgrößen vorausschauend vorherzusagen, um die Information an den Fahrer mit mehr Genauigkeit abzugeben, und um unnötige Informationen zu vermeiden. Auch ist es im Rahmen der Erfindung denkbar, dass beim Auswerten Positionsdaten und/oder Karteninformationen des Kraftfahrzeuges, bspw. eines Navigationssystems, oder eines mit dem Kraftfahrzeug gekoppelten Systems, bspw. eines separaten Navigationssystems oder Mobiltelefons, berücksichtigt werden können. Dabei ist es vorteilhaft, dass die Auswertung vorausschauend ausgeführt werden kann. Bspw., wenn eine Berg-ab-Fahrt bevorsteht, wird mehr Bremsleistung benötigt, wobei in diesem Fall die Rekuperation sinnvoll sein kann. Bei einer Berg-auf-Fahrt hingegen wird eher weniger Bremsleistung benötigt, wobei ein "Segelbetrieb" sinnvoll sein kann.

Vorteilhafterweise kann die Erfindung vorsehen, dass eine Information nur dann bereitgestellt werden kann und/oder eine Änderung der bereitgestellten Information an den Fahrer nur dann erfolgen kann, wenn ein erster Schwellwert überschritten wird. Hierbei kann sichergestellt werden, dass der Fahrer nicht zu sehr abgelenkt wird und nur bei signifikanten Abweichungen vom Optimal-Betrieb informiert wird, um dem Fahrer einen harmonischeren Fahreindruck oder eine leichter nachvollziehbare und erlernbare Empfehlung zu vermitteln. Wiederum kann in einer Notsituation und/oder bei einer Notbremsung, d. h. beim Überschreiten eines bestimmten zweiten Schwellwertes, die Auswertung abgebrochen werden, um den Fahrer in einer kritischen Situation nicht unnötig zu belästigen.

Erfindungsgemäß kann vorgesehen sein, dass das Bereitstellen einer Information optisch und/oder akustisch und/oder haptisch erfolgen kann. Erfindungsgemäß kann eine effektive Aufladung des elektrischen Speichers durch die E-Maschine beim Abbremsen des Kraftfahrzeuges ausgewertet werden und in Form einer akustischen, optischen und/oder haptischen Information zur optimalen Betätigung einer Bremse an den Fahrer in Abhängigkeit von der Auswertung bereitgestellt werden. Die Information kann dem Fahrer helfen, zu erkennen, wie stark die Verzögerung sein muss, um einen maximalen Anteil der kinetischen Energie in elektrische Energie umzuwandeln. Dies kann z. B. in Form einer Anzeigeeinheit am Armaturenbrett sichergestellt werden, oder in Form einer Multifunktionsanzeige, wobei die erfindungsgemäße Information neben einer anderen Information, bspw. über einen Treibstoffverbrauch, an den Fahrer angezeigt werden kann. Auch ist es denkbar, dass das Bereitstellen einer Information in einer Anzeigeeinheit, bevorzugt kombiniert in einem Interface zur Bewertung der Fahrweise des Fahrers, erfolgen kann. Aus diesem Interface kann z.B. auch eine Bewertung in der Vergangenheit durchgeführter Bremsmanöver erkennbar sein. Der Fahrer soll erfindungsgemäß erkennen, wann eine elektrische Bremse gegenüber einem "Segelbetrieb" zu bevorzugen ist, und wann die mechanische Bremse als Unterstützung der elektrischen Bremse sinnvoll eingesetzt werden kann. Hierbei kann in der Anzeigeeinheit die Bremsleistung, bei der die elektrische Bremse optimal ausgenutzt ist, besonders, bspw. mit Hilfe einer besonderen Farbe, bspw. Grün, hervorgehoben werden.

Ferner wird die erfindungsgemäße Aufgabe durch ein System zur Unterstützung eines Fahrers beim Abbremsen eines Kraftfahrzeuges gelöst, wobei das System mit einer E-Maschine zum Aufladen eines elektrischen Speichers, wobei die E-Maschine mit einem Antriebsstrang des Kraftfahrzeuges koppelbar ist, um den elektrischen Speicher aufzuladen, wobei der Antriebsstrang einen Verbrennungsmotor und ein Getriebe umfasst, einer Auswerteinheit zum Auswerten einer effektiven Aufladung eines elektrischen Speichers durch die E-Maschine beim Abbremsen des Kraftfahrzeuges, einer Anzeigeeinheit zum Bereitstellen einer Information zur optimalen Betätigung einer Bremse an den Fahrer in Abhängigkeit von der Auswertung ausgeführt ist, und wobei beim Auswerten kinematische Verluste berücksichtigt werden, die durch Koppeln der E-Maschine mit dem Antriebsstrang und somit durch Mitschleppen mindestens des Verbrennungsmotors des Antriebsstranges entstehen. Selbstverständlich gelten hier auch die gleichen Vorteile wie bei dem erfindungsgemäßen Verfahren, das oben beschrieben wurde.

Auch wird die erfindungsgemäße Aufgabe durch eine Anzeigeeinheit gelöst, die die Ergebnisse der erfindungsgemäßen Auswertung als Empfehlung an den Fahrer darstellen kann. Dabei kann ein Diagramm hilfreich sein, in welchem die Höhe der Balken der Energierückgewinnung entsprechen kann, wobei der Balken, der der maximalen Leistung der E-Maschine entspricht, mit einer tieferen oder einer dunkleren Farbe, bspw. mit einer speziellen Farbe gekennzeichnet werden kann. Dabei ist es denkbar, dass der Anfangsbereich im Diagramm, der einer noch nicht sinnvollen Rekuperation entspricht, mit hellen Farben, dass der Bereich einer sinnvollen Rekuperation mit Grün, dass der Bereich einer maximalen Rekuperation mit Dunkelgrün und dass der Bereich mit einer stärkeren Verzögerung, unterstützt durch die mechanische Bremse, mit Rot gekennzeichnet werden kann. Zudem ist es denkbar, dass der Balken, der einem aktuellen Betrieb entspricht, heller aufleuchten kann. Auch im Zusammenhang mit der erfindungsgemäßen Anzeigeeinheit wird auf die Vorteile verwiesen, die im Zusammenhang mit dem erfindungsgemäßen Verfahren beschrieben wurden.

Weitere, die Erfindung verbessernde Maßnahmen werden nachstehend mit der Beschreibung der bevorzugten Ausführungsbeispiele der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Fig. 1: eine schematische Darstellung eines möglichen Kraftfahrzeuges, in welchem die Erfindung einsetzbar ist,
- Fig. 2: eine schematische Darstellung einer optimalen Bremsleistung in Abhängigkeit von einer Verzögerung des Kraftfahrzeuges,
- Fig. 3: einen beispielhaften Verlauf eines Bremsvorganges, und
- Fig. 4: eine beispielhafte schematische Darstellung einer erfindungsgemäßen Anzeigeeinheit.

In den unterschiedlichen Figuren sind gleiche Teile stets mit denselben Bezugszeichen versehen, weshalb diese in der Regel nur einmal beschrieben werden.

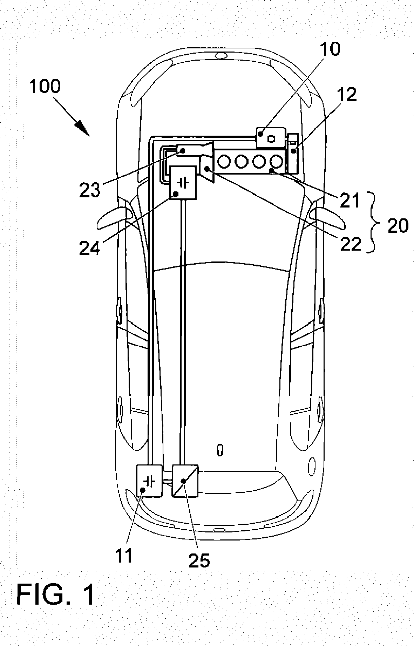

Die Figur 1 zeigt dabei einen schematischen Aufbau eines Kraftfahrzeuges 100, insbesondere eines Mild-Hybrid-Kraftfahrzeuges 100, welches im Antriebsstrang 20 mit einer Verbrennungskraftmaschine 21 bzw. einem Verbrennungsmotor 21 (im Weiteren einfach Motor 21 genannt) und einem Getriebe 22 ggf. mit einer Kupplung K ausgestattet ist. Das Kraftfahrzeug 100 weist eine E-Maschine 10 auf, die im dargestellten Ausführungsbeispiel im Riementrieb 12 mit dem Motor 21 in Wirkverbindung bringbar ist. Selbstverständlich ist es erfindungsgemäß ebenfalls denkbar, dass die E-Maschine 10 direkt auf der Kurbelwelle des Motors 21 angeordnet sein kann. Der Motor 21 ist mit einem Starter 23 und einer Starter-Batterie 24 ausgestattet. Die E-Maschine 10 kann zum Aufladen eines elektrischen Speichers 11 genutzt werden, der über einen DC/DC-Wandler 25 mit der Starter-Batterie 24 verbunden werden kann. Die E-Maschine 10 in einem solchen Hybridkraftfahrzeug 100 kann die Funktionen von einem Starter und einer Lichtmaschine erfüllen. Die E-Maschine 10 kann also zum Antreiben des Kraftfahrzeuges 100 und zum Umwandeln der Bewegungsenergie des Kraftfahrzeuges 100, insbesondere beim Abbremsen, in die elektrische Energie genutzt werden. Wenn jedoch die E-Maschine 10 über den Motor 21 an das Getriebe 22, und damit an die Räder des Fahrzeugs, gekoppelt ist, können die kinematischen Verluste durch Mitschleppen des Motors 21 so hoch sein, dass die Rekuperation bzw. die Rückgewinnung der elektrischen Energie aus der Bewegungsenergie nicht sinnvoll ist.

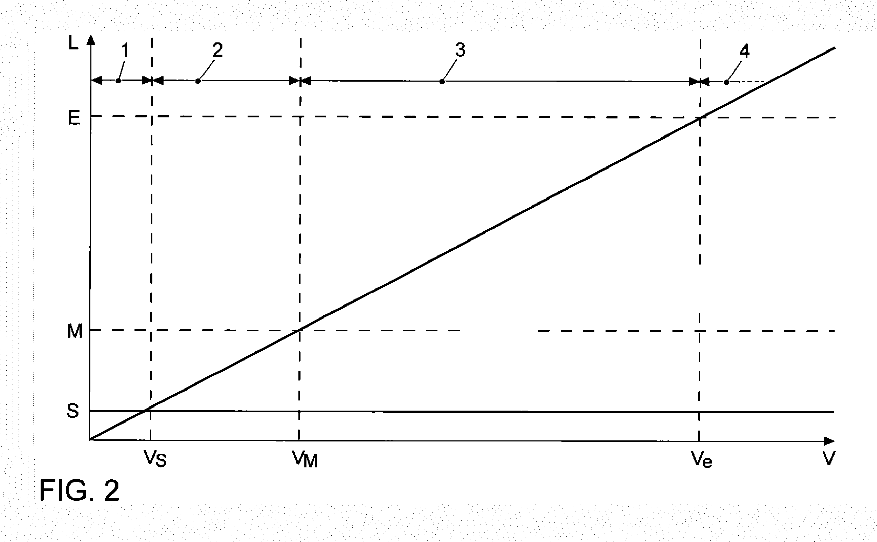

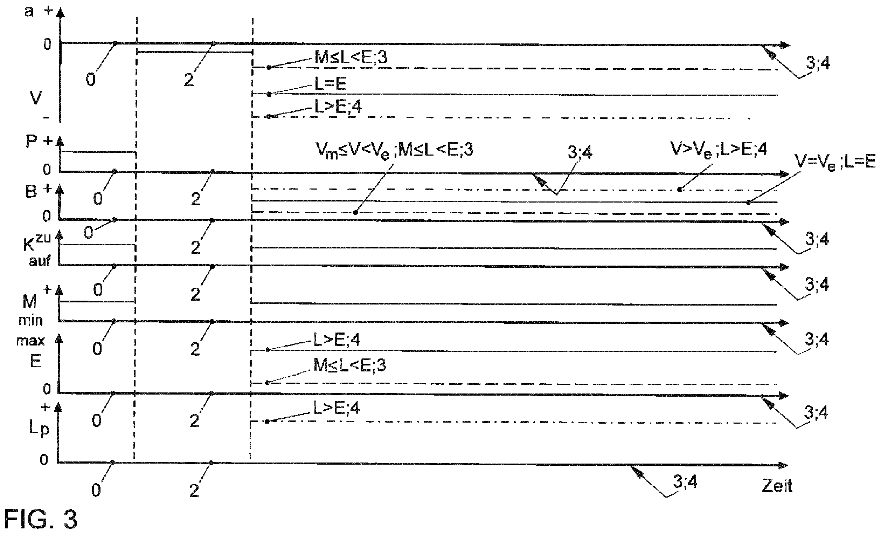

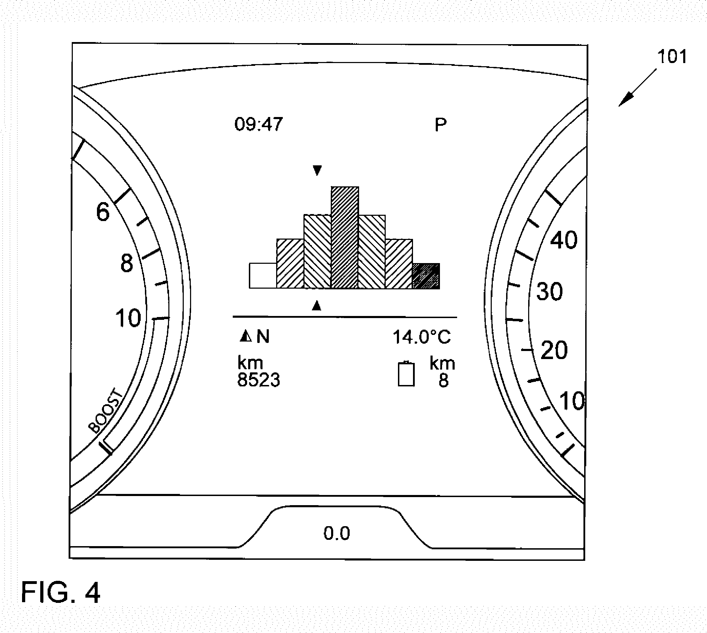

Die Erfindung ermöglicht es, die energetischen Verluste beim Abbremsen des Kraftfahrzeuges genau zu identifizieren und zu analysieren. Eine erfindungsgemäße Auswertung einer effektiven Aufladung des elektrischen Speichers 11 wird nachfolgend mit Hilfe der Figuren 2 und 3 erklärt, wobei die Auswertung dazu dient, eine Empfehlung zur optimalen Betätigung einer Bremse an den Fahrer bereitzustellen, die nachfolgend mit Hilfe der Figur 4 beispielhaft gezeigt wird. Des Weiteren kann die Empfehlung, wie bereits beschrieben, auch die automatische Auswahl einer bestimmten Gangstufe im Getriebe 22 zur Minimierung der energetischen Verluste oder zumindest eine Empfehlung der manuell auszuwählenden Gangstufe umfassen.

Die Figur 2 zeigt dabei mögliche energetische Verluste bzw. eine Bremsleistung L, die zu einer Verzögerung V des Kraftfahrzeuges 100 führen können, die mit Hilfe einer Kennlinie gezeigt sind. Auf der vertikalen Achse ist dabei die Bremsleitung L unterschiedlicher energetischer Verluste gezeigt und auf der horizontalen Achse die dadurch erzielte Verzögerung V des Kraftfahrzeuges 100.

Wie die Erfindung erkennt, verliert das Kraftfahrzeug 100 zunächst im ersten Bereich 1 die Geschwindigkeit alleine durch gewöhnliche Fahrwiderstände, wie einfache Luftwiderstände, Reibungswiderstände zwischen den Rädern und der Fahrbahn usw., die ohnehin nicht zu vermeiden sind. Eine minimale, wenn auch kleine, Verzögerung Vs ist dabei nicht zu vermeiden und entspricht einer sogenannten Summen-Verzögerung Vs bei einer niedrigen aber dennoch feststellbaren Bremsleistung L=S, also einer Summen-Verlustleistung S. Für einen Betrieb des Fahrzeuges im Bereich 1, also mit einer kleineren Verzögerung als Vs, müsste ein Teil der unvermeidlichen Bremsleistung S durch Beschleunigungsleistung aus dem Fahrzeugantrieb kompensiert werden, stellt also keinen Bremszustand, sondern einen Vortriebszustand dar. Sollte bei der minimalen Verzögerung Vs eine elektrische Bremse betätigt werden, d. h. die E-Maschine 10 im Generator-Modus betrieben werden, so wäre kein Rekuperationseffekt zu erzielen, da die Bewegungsenergie bereits durch die unvermeidbaren Widerstände aufgezehrt wird. Die Bremsleistung L kann dabei als Summen-Verlustleistung S bezeichnet werden.

Im zweiten Bereich 2 würden die energetischen bzw. die kinematischen Verluste M durch Koppeln der E-Maschine 10 an den Antriebsstrang 20 so groß sein, dass die elektrische Rekuperation immer noch nicht sinnvoll ist. Der zweite Bereich 2 entspricht dabei kleinen Verzögerungen Vm>V>=Vs bis zu einer gewissen Grenze Vm, bei der die Bremsleitung L gleich der Schleppleistung M ist. Die Mitschlepp-Verzögerung Vm ergibt sich in Folge der kinematischen Verluste durch Mitschleppen sämtlicher Komponenten im Antriebsstrang 20, bspw. des Motors 21 und des Getriebes 22, sowie der unvermeidbaren Summen-Verlustleistung S. Erst ab dem Punkt (M, Vm) ist eine Betätigung der elektrischen Bremse überhaupt sinnvoll. Im zweiten Bereich 2 ist es gemäß der Erfindung sinnvoll, einen "Segelbetrieb" vorzuziehen, da im Schlepp- oder Rekuperationsbetrieb mit einer kleineren Verzögerung als Vm, dennoch mindestens die Schleppleistung M zu erbringen ist; ein Teil der Bremsleistung also erneut durch Beschleunigungsleistung aus dem Fahrzeugantrieb zu kompensieren wäre. Im "Segelbetrieb" kann eine Kupplung K entlastet werden und ggf. der Motor 21 abgestellt werden, wodurch die erforderliche Leistung von M auf S sinkt und somit eine Verzögerung kleiner als Vm dargestellt werden kann, ohne Beschleunigungsleistung aus dem Fahrzeugantrieb zu stellen. Die Verlustleitung L kann sich in diesem zweiten Bereich 2 durch Schleppverluste M sämtlicher Komponenten im Antriebsstrang 20, wie des Motors 21 und des Getriebes 22, und durch die Summen-Verlustleistung S zusammensetzen.

Im dritten Bereich 3 kann eine elektrische Rekuperationsleistung E zusätzlich zur Verlustleistung M durch Schleppverluste des Antriebsstranges 20 und die Summen-Verlustleistung S dargestellt werden. Dieser dritte Bereich 3 entspricht einer größeren Verzögerung V>=Vm, die zwischen einer Schleppverzögerung Vm und einer maximalen, durch die elektrische Bremse erzielbaren Verzögerung Ve liegt. Die Verlustleitung L kann sich in diesem dritten Bereich 3 durch Aufladen E des elektrischen Speichers 11, durch die Schleppverluste M sämtlicher Komponenten im Antriebsstrang 20 und durch die Summen-Verlustleistung S zusammensetzen.

Im vierten Bereich 4 ist sogar bei einer maximalen Auslastung der E-Maschine 10 eine größere Verzögerung V als die maximale elektrische Verzögerung Ve nur durch die E-Maschine 10 nicht mehr erzielbar. In diesem Bereich 4, wenn eine stärkere Verzögerung V gewünscht ist, ist eine Betätigung einer mechanischen Bremse, also einer Widerstandsbremse notwendig. Die Verlustleistung L kann sich in diesem vierten Bereich 4 durch Wärmeverluste aufgrund der Reibung an der Widerstandbremse, durch Aufladen E des elektrischen Speichers 11, durch die Schleppverluste M sämtlicher Komponenten im Antriebsstrang 20 und durch die Summen-Verlustleistung S zusammensetzen.

An der Grenze zwischen Bereich 3 und Bereich 4 ist der Anteil der elektrischen Rekuperationsleistung an der Gesamt-Bremsleistung maximal. Die zugehörige Verzögerung Ve ist entsprechend die anzustrebende energetisch optimale Verzögerung.

In der Figur 3 sind sämtliche Kennlinien für einen Bremsvorgang des Kraftfahrzeuges 100 gezeigt. Ganz oben ist eine Fahrzeug-Beschleunigung a gezeigt, und zwar zunächst bei einer Konstantfahrt 0, danach beim "Segelbetrieb" 2, wie im zweiten Bereich 2 der Figur 2 gezeigt ist, und danach bei einer Abbremsung, bspw. einer geringen Abbremsung M<=L<E, wie im dritten Bereich 3 der Figur 2 gezeigt ist, einer optimalen Abbremsung L=E und einer höheren Abbremsung L>E, wie im vierten Bereich 4 der Figur 2 gezeigt ist. Die Fahrzeug-Beschleunigung a im negativen Bereich entspricht der Verzögerung V aus der Figur 2.

Weiter unten in der Figur 3 ist die entsprechende Stellung eines Fahrpedals P dargestellt, und zwar betätigt bei der Konstantfahrt 0, entlastet beim "Segelbetrieb" 2 und ebenfalls entlastet beim Betätigen einer Bremse 3, 4 bzw. einer der Bremsen, also beim Betätigen der elektrischen Bremse im dritten Bereich 3 der Figur 2 und beim Betätigen der elektrischen und der mechanischen Bremse im vierten Bereich 4 der Figur 2.

Noch weiter unten in der Figur 3 ist die entsprechende Stellung eines Bremspedals B dargestellt, und zwar entlastet bei der Konstantfahrt 0, entlastet beim "Segelbetrieb" 2 und betätigt in den Bereichen 3 und 4 der Figur 2, also beim Betätigen der elektrischen Bremse im dritten Bereich 3 (Vm<=V<Ve, M=<L<E) der Figur 2, bei einer optimalen Betätigung der elektrischen Bremse (V=Ve, L=E) und beim Betätigen der elektrischen und der mechanischen Bremse im vierten Bereich 4 (V>Ve, L>E) der Figur 2.

Weiterhin wird in der Figur 3 die Position der Kupplung K gezeigt, und zwar geschlossen bei der Konstantfahrt 0, geöffnet beim "Segelbetrieb" 2 und geschlossen in den Bereichen 3 und 4 der Figur 2, also beim Betätigen der elektrischen Bremse im dritten Bereich 3 der Figur 2 und beim Betätigen der elektrischen und der mechanischen Bremse im vierten Bereich 4 der Figur 2.

Noch weiter unten in der Figur 3 sind die Schleppverluste M im Antriebsstrang 20 dargestellt, die bei der Konstantfahrt 0 und erfindungsgemäß beim Betätigen der elektrischen Bremse 3 in den Bereichen 3 und 4 der Figur 2 entstehen. Im "Segelbetrieb" 2 sind die Schleppverluste M im Antriebsstrang 20 durch Öffnung der Kupplung K vermieden.

Weiter unten in der Figur 3 ist die elektrische Rekuperationsleistung E dargestellt, die erst im Bereich 3 (M=<L<E) der Figur 2 und im Bereich 4 (L>E) der Figur 2 sinnvoll ist. Also nur dann, wenn die zur gewünschten Verzögerung korrespondierende Leistung die Schleppverluste M kompensiert oder übersteigt, und optimal dann, wenn die elektrische Rekuperationsleistung E der maximalen Leistung der E-Maschine 20 entspricht.

Und schließlich unten in der Figur 3 ist die mechanische Bremsleistung Lp dargestellt, die im vierten Bereich 4 der Figur 4 erforderlich ist, da die gewünschte Verzögerung nicht mehr alleine durch die E-Maschine 10 bereitgestellt werden kann.

Die Figur 4 zeigt abschließend beispielhaft eine mögliche Anzeigeeinheit 101, mit Hilfe von welcher eine Empfehlung an den Fahrer zu einer effektiven Aufladung des elektrischen Speichers 11 zu einem optimalen rekuperativen Abbremsen im Grenzbereich zwischen den Bereichen 3 und 4 in Figur 2 abgegeben werden kann. Die Anzeigeeinheit 101 kann ein Diagramm mit Balken darstellen, in welchem die Höhe der Balken der Energierückgewinnung bzw. der Bremsleitung L in Abhängigkeit von der aktuellen Verzögerung V und/oder einer Geschwindigkeit des Kraftfahrzeuges 100 entsprechen kann. Hierbei kann der Balken, der der maximalen Leistung L=E der E-Maschine 10 entspricht, mit einer bestimmten Farbe, bspw. mit Dunkelgrün gekennzeichnet werden. Dabei ist es denkbar, dass der Anfangsbereich im Diagramm, der einer noch nicht sinnvollen Rekuperation L<M entspricht, mit hellen Farben gekennzeichnet werden kann. Auch ist es denkbar, dass der Bereich einer sinnvollen Rekuperation L>M mit Grün gekennzeichnet wird. Zudem ist es denkbar, dass der Balken, der einem aktuellen Betrieb entspricht, heller aufleuchtet oder mit Pfeilen hervorgehoben werden kann. Ein roter Balken kann dabei kennzeichnen, dass die mechanische Bremse als Unterstützung der elektrischen Bremse benötigt wird.

### Bezugszeichenliste

- 0: Konstantfahrt
- 1: erster Bereich / Summen-Verzögerung
- 2: zweiter Bereich / Schleppverluste am Antriebsstrang überwiegen
- 3: dritter Bereich / elektrische Rekuperation überwiegt
- 4: vierter Bereich / mechanische Bremsleistung erforderlich

- 10: E-Maschine
- 11: elektrischer Speicher
- 12: Riementrieb

- 20: Antriebsstrang
- 21: Verbrennungsmotor bzw. -kraftmaschine
- 22: Getriebe
- 23: Starter
- 24: Starter-Batterie
- 25: Wandler

- 100: Kraftfahrzeug
- 101: Anzeigeeinheit

- a: Fahrzeug-Beschleunigung

- L: Bremsleitung
- S: Summen-Verlustleistung
- M: Schleppverluste
- E: Verluste durch Aufladen des elektrischen Speichers 11 / elektrische Rekuperationsleistung
- Lp: mechanische Bremsleistung
- V: Verzögerung
- Vs: Summen-verzögerung
- Vm: maximale Verzögerung durch Schleppverluste im Antriebsstrang
- Ve: optimale Leistung der E-Maschine 10
- B: Bremspedal
- K: Kupplung
- P: Fahrpedal

## Patentansprüche

1. Verfahren zur Unterstützung eines Fahrers beim Abbremsen eines Kraftfahrzeuges (100), mit
einer E-Maschine (10) zum Aufladen eines elektrischen Speichers (11),
wobei die E-Maschine (10) mit einem Antriebsstrang (20) des Kraftfahrzeuges (100) koppelbar ist, um den elektrischen Speicher (11) aufzuladen,
wobei der Antriebsstrang (20) einen Verbrennungsmotor (21) und ein Getriebe (22) umfasst,
umfassend folgende Schritte:
- Auswerten einer effektiven Aufladung eines elektrischen Speichers (11) durch die E-Maschine beim Abbremsen des Kraftfahrzeuges (100),
- Bereitstellen einer Information zur optimalen Betätigung einer mechanischen und/oder elektrischen Bremse, die durch einen Fahrer nacheinander oder gleichzeitig betätigt werden können, an den Fahrer in Abhängigkeit von der Auswertung, **dadurch gekennzeichnet, dass** beim Auswerten kinematische Verluste berücksichtigt werden, die durch Koppeln der E-Maschine (10) mit dem Antriebsstrang (20) und durch Mitschleppen mindestens des Verbrennungsmotors (21) des Antriebsstranges (20) entstehen.

2. Verfahren nach Anspruch 1,
**dadurch gekennzeichnet,**
**dass** beim Auswerten kinematische Verluste berücksichtigt werden, die durch Mitschleppen des Getriebes (22) des Kraftfahrzeuges (100) entstehen.

3. Verfahren nach Anspruch 1 oder 2,
**dadurch gekennzeichnet,**
**dass** beim Auswerten elektrische Verluste zum Aufladen einer weiteren E-Maschine berücksichtigt werden, die insbesondere in ständiger Wirkverbindung mit dem Antriebsstrang (20) oder mit einem Rad des Kraftfahrzeuges (100) oder mit einem zweiten Antriebsstrang des Kraftfahrzeuges (100) steht.

4. Verfahren nach einem der vorhergehenden Ansprüche,
**dadurch gekennzeichnet,**
**dass** beim Auswerten elektrische Zustandsgrößen der E-Maschine (10) berücksichtigt werden, insbesondere elektrische Leistung, Strom, Spannung,
insbesondere dass beim Auswerten mechanische Zustandsgrößen der E-Maschine (10) berücksichtigt werden, insbesondere mechanische Leistung, Drehzahl, Drehmoment, und bevorzugt dass beim Auswerten thermische Zustandsgrößen der E-Maschine (10) berücksichtigt werden, insbesondere Temperatur.

5. Verfahren nach einem der vorhergehenden Ansprüche,
**dadurch gekennzeichnet,**
**dass** beim Auswerten mechanische Zustandsgrößen des Getriebes (22) berücksichtigt werden, insbesondere Eingangs-Drehzahl, Eingangs-Drehmoment, Ausgangs-Drehzahl, Ausgangs-Drehmoment, gewählter Gang,
bevorzugt dass beim Auswerten thermische Zustandsgrößen des Getriebes (22) berücksichtigt werden, insbesondere Temperatur,
und insbesondere dass das Verfahren mindestens einen weiteren Schritt aufweist:
- Auswählen, insbesondere automatisch, einer Gangstufe im Getriebe (22), um die Schleppverluste im Antriebsstrang (20) zu reduzieren,.

6. Verfahren nach einem der vorhergehenden Ansprüche,
**dadurch gekennzeichnet,**
**dass** beim Auswerten mechanische Zustandsgrößen des Kraftfahrzeuges (100) berücksichtigt werden, insbesondere Geschwindigkeit, Verzögerung.

7. Verfahren nach einem der vorhergehenden Ansprüche,
**dadurch gekennzeichnet,**
**dass** beim Auswerten Daten von Umfeldsensorik des Kraftfahrzeuges (100) berücksichtigt werden, insbesondere von Assistenzsystemen, wie Geschwindigkeitsregelanlage, Abstandshaltefunktion, Abstandswarner, Verkehrsschildererkennung, Notbremsassistent,
insbesondere dass beim Auswerten Positionsdaten und/oder Karteninformationen des Kraftfahrzeuges (100), bspw. eines im Kraftfahrzeug integrierten oder eines externen Navigationssystems, wie z. B. in einem Mobiltelefon, berücksichtigt werden.

8. Verfahren nach einem der vorhergehenden Ansprüche,
**dadurch gekennzeichnet,**
**dass** Bereitstellen einer Information und/oder Ändern der bereitgestellten Information an den Fahrer nur beim Überschreiten eines ersten Schwellwertes erfolgt und beim Überschreiten eines zweiten Schwellwertes abgebrochen wird.

9. Verfahren nach einem der vorhergehenden Ansprüche,
**dadurch gekennzeichnet,**
**dass** das Bereitstellen einer Information optisch und/oder akustisch und/oder haptisch erfolgt,
insbesondere dass das Bereitstellen einer Information in einer Anzeigeeinheit (101), bevorzugt kombiniert in einem Interface zur Bewertung der Fahrweise des Fahrers, erfolgt.

10. System zur Unterstützung eines Fahrers beim Abbremsen eines Kraftfahrzeuges (100), mit
einer E-Maschine (10) zum Aufladen eines elektrischen Speichers (11),
wobei die E-Maschine (10) mit einem Antriebsstrang (20) des Kraftfahrzeuges (100) koppelbar ist, um den elektrischen Speicher (11) aufzuladen,
wobei der Antriebsstrang (20) einen Verbrennungsmotor (21) und ein Getriebe (22) umfasst,
einer Auswerteinheit zum Auswerten einer effektiven Aufladung eines elektrischen Speichers (11) durch die E-Maschine beim Abbremsen des Kraftfahrzeuges (100), einer Anzeigeeinheit (101) zum Bereitstellen einer Information zur optimalen Betätigung einer Bremse an den Fahrer in Abhängigkeit von der Auswertung, **dadurch gekennzeichnet, dass** beim Auswerten kinematische Verluste berücksichtigt werden, die durch Koppeln
der E-Maschine (10) mit dem Antriebsstrang (20) und durch Mitschleppen des Verbrennungsmotors (21) des Antriebsstranges (20) entstehen.

## Claims

1. Method for assisting a driver during the braking of a motor vehicle (100), having
an electric machine (10) for charging an electric accumulator (11), wherein the electric machine (10) can be coupled to a drive train (20) of the motor vehicle (100) in order to charge the electric accumulator (11),
wherein the drive train (20) comprises an internal combustion engine (21) and a transmission (22),
comprising the following steps:
- evaluating an effective charging of an electric accumulator (11) by the electric machine during the braking of the motor vehicle (100),
- providing the driver with information for optimal actuation of a mechanical and/or electrical brake, which can be actuated successively or simultaneously by a driver, as a function of the evaluation,
**characterized in that,**
in the evaluation, kinematic losses are taken into account which are produced by coupling the electric machine (10) to the drive train (20) and by the coupled motion of at least the internal combustion engine (21) of the drive train (20).

2. Method according to claim 1,
**characterized in that,**
in the evaluation, kinematic losses are taken into account which arise from the coupled motion of the transmission (22) of the motor vehicle (100).

3. Method according to claim 1 or 2,
**characterized in that,**
in the evaluation, electrical losses are taken into account for charging a further electric machine, which, in particular, is in constant active connection with the drive train (20) or with a wheel of the motor vehicle (100), or with a second drive train of the motor vehicle (100).

4. Method according to one of the preceding claims,
**characterized in that,**
in the evaluation, electrical state variables of the electric machine (10) are taken into account - in particular, electrical power, current, and voltage - and,
in particular, that, in the evaluation, mechanical state variables of the electric machine (10) are taken into account - in particular, mechanical power, rotational speed, and torque -
and preferably that, in the evaluation, thermal state variables of the electric machine (10) are taken into account - in particular, temperature.

5. Method according to one of the preceding claims,
**characterized in that,**
in the evaluation, mechanical state variables of the transmission (22) are taken into account - in particular, input rotational speed, input torque, output rotational speed, output torque, and selected gear -
preferably that, in the evaluation, thermal state variables of the transmission (22) are taken into account - in particular, temperature -
and, in particular, that the method comprises at least one further step:
- selecting - in particular, automatically - a gear step in the transmission (22) in order to reduce the drag losses in the drive train (20).

6. Method according to one of the preceding claims,
**characterized in that,**
in the evaluation, mechanical state variables of the motor vehicle (100) are taken into account - in particular, speed and deceleration.

7. Method according to one of the preceding claims,
**characterized in that,**
in the evaluation, data are taken into account from the environmental sensor system of the motor vehicle (100) - in particular, assistance systems such as the cruise control system, distance holding function, distance warning, traffic sign recognition, emergency braking assistant -
in particular, that, in the evaluation, position data and/or map information of the motor vehicle (100), e.g., a navigation system integrated into the motor vehicle or an external navigation system, such as, for example, in a mobile telephone, are taken into account.

8. Method according to one of the preceding claims,
**characterized in that**
information is provided to the driver and/or the information provided to the driver is changed only when a first threshold value is exceeded, and is terminated when a second threshold value is exceeded.

9. Method according to one of the preceding claims,
**characterized in that**
the provision of information takes place optically and/or acoustically and/or haptically -
in particular, that the provision of information takes place in a display unit (101) - preferably combined in an interface for evaluating the driving style of the driver.

10. System for assisting a driver during the braking of a motor vehicle (100), having
an electric machine (10) for charging an electric accumulator (11),
wherein the electric machine (10) can be coupled to a drive train (20) of the motor vehicle (100) in order to charge the electric accumulator (11),
wherein the drive train (20) comprises an internal combustion engine (21) and a transmission (22),
an evaluation unit for evaluating an effective charging of an electric accumulator (11) by the electric machine during the braking of the motor vehicle (100),
a display unit (101) for providing the driver with information for optimal actuation of a brake as a function of the evaluation,
**characterized in that,**
in the evaluation, kinematic losses are taken into account which are produced by coupling the electric machine (10) to the drive train (20) and by the coupled motion of the internal combustion engine (21) of the drive train (20).

## Revendications

1. Procédé d'assistance d'un conducteur lors du freinage d'un véhicule automobile (100), comprenant
une machine électrique (10) pour la charge d'un accumulateur électrique (11),
dans lequel la machine électrique (10) peut être accouplée à une chaîne cinématique (20) du véhicule automobile (100), afin de charger l'accumulateur électrique (11),
dans lequel la chaîne cinématique (20) comprend un moteur à combustion interne (21) et une transmission (22),
comprenant les étapes suivantes :
- évaluation d'une charge effective d'un accumulateur électrique (11) par la machine électrique lors du freinage du véhicule automobile (100),
- mise à disposition d'une information pour l'actionnement optimal de freins mécanique et/ou électrique, qui peuvent être actionnés par un conducteur l'un après l'autre ou simultanément, pour le conducteur en fonction de l'évaluation,
**caractérisé en ce que**
lors de l'évaluation des pertes cinématiques, qui apparaissent par l'accouplement de la machine électrique (10) avec la chaîne cinématique (20) et par l'entraînement d'au moins un moteur à combustion interne (21) de la chaîne cinématique (20), sont prises en compte.

2. Procédé selon la revendication 1,
**caractérisé**
**en ce que** lors de l'évaluation, des pertes cinématiques, qui apparaissent par l'entraînement de la transmission (22) du véhicule automobile (100), sont prises en compte.

3. Procédé selon la revendication 1 ou 2,
**caractérisé**
**en ce que** lors de l'évaluation, des pertes électriques pour la charge d'une autre machine électrique, qui est en particulier en liaison fonctionnelle constante avec la chaîne cinématique (20) ou avec une roue du véhicule automobile (100) ou avec une deuxième chaîne cinématique du véhicule automobile (100), sont prises en compte.

4. Procédé selon l'une quelconque des revendications précédentes,
**caractérisé**
**en ce que** lors de l'évaluation, des variables d'état électriques de la machine électrique (10) sont prises en compte, notamment la puissance électrique, le courant, la tension,
en particulier **en ce que** lors de l'évaluation, des variables d'état mécaniques de la machine électrique (10) sont prises en compte, notamment la puissance mécanique, la vitesse de rotation, le couple,
et de préférence **en ce que** lors de l'évaluation, des variables d'état thermiques de la machine électrique (10) sont prises en compte, en particulier la température.

5. Procédé selon l'une quelconque des revendications précédentes,
**caractérisé**
**en ce que** lors de l'évaluation, des variables d'état mécaniques de la transmission (22) sont prises en compte, notamment la vitesse de rotation d'entrée, le couple d'entrée, la vitesse de rotation de sortie, le couple de sortie, le rapport sélectionné,
de préférence **en ce que** lors de l'évaluation, des variables d'état thermiques de la transmission (22) sont prises en compte, en particulier la température,
et en particulier **en ce que** le procédé comprend au moins une étape supplémentaire :
- sélection, en particulier automatique, d'un rapport de vitesse dans la transmission (22), afin de réduire les pertes d'entraînement dans la chaîne cinématique (20).

6. Procédé selon l'une quelconque des revendications précédentes,
**caractérisé**
**en ce que** lors de l'évaluation, des variables d'état mécaniques du véhicule automobile (100) sont prises en compte, en particulier la vitesse, la décélération.

7. Procédé selon l'une quelconque des revendications précédentes,
**caractérisé**
**en ce que** lors de l'évaluation, des données de capteur d'environnement du véhicule automobile (100) sont prises en compte, en particulier depuis des systèmes d'assistance, tels qu'un régulateur de vitesse, une fonction de maintien des distances, un avertisseur de distance, une reconnaissance des panneaux de signalisation, un assistant de freinage d'urgence,
en particulier **en ce que** lors de l'évaluation, des données de position et/ou des informations de carte du véhicule automobile (100), par exemple d'un système de navigation intégré au véhicule automobile ou externe, comme par exemple dans un téléphone mobile, sont prises en compte.

8. Procédé selon l'une quelconque des revendications précédentes,
**caractérisé**
**en ce que** la mise à disposition d'une information et/ou la modification de l'information mise à disposition au conducteur n'est effectuée qu'en cas de dépassement d'une première valeur seuil et est interrompue lors du dépassement d'une seconde valeur seuil.

9. Procédé selon l'une quelconque des revendications précédentes,
**caractérisé**
**en ce que** la mise à disposition d'une information est effectuée de manière optique et/ou acoustique et/ou haptique,
en particulier **en ce que** la mise à disposition d'une information est effectuée dans une unité d'affichage (101), de préférence de manière combinée dans une interface pour évaluer la conduite du conducteur.

10. Système d'assistance d'un conducteur lors du freinage d'un véhicule automobile (100), comprenant
une machine électrique (10) pour la charge d'un accumulateur électrique (11),
dans lequel la machine électrique (10) peut être accouplée à une chaîne cinématique (20) du véhicule automobile (100), afin de charger l'accumulateur électrique (11),
dans lequel la chaîne cinématique (20) comprend un moteur à combustion interne (21) et une transmission (22),
une unité d'évaluation destinée à évaluer une charge effective d'un accumulateur électrique (11) par la machine électrique lors du freinage du véhicule automobile (100),
une unité d'affichage (101) destinée à mettre à disposition une information pour l'actionnement optimal d'un frein pour le conducteur en fonction de l'évaluation,
**caractérisé en ce que**
lors de l'évaluation, des pertes cinématiques, qui apparaissent par l'accouplement de la machine électrique (10) avec la chaîne cinématique (20) et par l'entraînement du moteur à combustion interne (21) de la chaîne cinématique (20), sont prises en compte.
